# FASCICULE DE BREVET EUROPEEN

(11) **EP 0 750 102 B1**
(45) Date de publication et mention de la délivrance du brevet: **27.03.2002**
(21) Numéro de dépôt: 96401144.9
(22) Date de dépôt: 29.05.1996
(51) Int. Cl.: F02D 9/02, F02M 35/10

(54) **Procédé et dispositif de contrôle de l'air à l'admission d'un moteur 4 temps à allumage commandé**
Verfahren und Vorrichtung zur Steuerung der Einlassluft einer fremdgezündeten Viertaktbrennkraftmaschine
Method and device for controlling the inlet air of a spark ignition four-stroke engine

(30) Priorité: 19.06.1995 FR 9507384
(43) Date de publication de la demande: 27.12.1996
(73) Titulaire: INSTITUT FRANCAIS DU PETROLE, 92500 Rueil Malmaison (FR)
(72) Inventeur: Monnier, Gaétan, 92500 Rueil-Malmaison (FR)

(56) Documents cités:
- DE-A- 3 835 512
- FR-A- 1 505 096
- FR-A- 2 603 662
- JP-A- 2 125 911
- JP-A- 60 036 721
- US-A- 4 466 416

## Description

La présente invention concerne le domaine des moteurs 4 temps à allumage commandé et à injection directe de carburant.

Plus précisément la présente invention a trait au contrôle de l'admission et plus particulièrement du débit d'air dans de tels moteurs.

Le développement de l'injection directe d'essence dans les moteurs 4 temps à allumage commandé permet une combustion dite stratifiée où le mélange air/carburant inflammable est confiné dans une partie de la chambre et où l'autre partie de la chambre est remplie, soit d'air soit d'un mélange air/gaz brûlés recyclés.

Le fonctionnement en mode stratifié permet d'éliminer la boucle de pompage du moteur 4 temps à allumage commandé, responsable d'une chute importante du rendement du cycle Beau de Rochas aux charges partielles.

Cependant le moteur ne peut fonctionner en permanence de cette façon notamment pour des raisons de dépollution catalytique. Il faut donc pouvoir maîtriser par un système de contrôle du débit d'air fourni au moteur les différents modes de fonctionnement du moteur à savoir principalement le mode combustion stratifiée et le mode combustion en mélange homogène.

Classiquement cette fonction connue est réalisée par un papillon de gaz motorisé. La demande de couple du véhicule est alors transmise à un calculateur de commande par un potentiomètre et c'est le calculateur qui, en fonction des données introduites et de sa programmation, déclenche l'un ou l'autre des modes, de fonctionnement du moteur évoqués ci-dessus.

En pratique cette solution pose des problèmes de coût : le calculateur et ses interfaces, sa programmation.

La sécurité est en outre mise en cause puisque la fonction de déclenchement ou de basculement d'un mode de fonctionnement vers un autre n'est plus du tout maîtrisée par le conducteur du véhicule mais par un système électronique comprenant un calculateur. Autrement dit le débit d'air du moteur n'est plus lié mécaniquement et donc contrôlé par le conducteur.

Il est encore connu par le brevet US 4 192 262, afin d'améliorer le balayage dans la chambre de combustion, de prévoir une admission supplémentaire par laquelle de l'air sous pression est injecté de façon contrôlé, en fonction des conditions de fonctionnement du moteur.

Les systèmes connus évoqués ci-dessus présentent tous l'inconvénient d'être relativement sophistiqués, ce qui augmente les coûts.
Il est également connu, par les documents DE-A-3 835 512 ou FR-A-1 505 096, un dispositif de contrôle de l'air à l'admission d'un moteur permettant de l'alimenter en air selon les conditions requises pour son fonctionnement, tel qu'au ralenti, à marche normale ou à haute charge.

Pour ce faire, ce type de dispositif comprend un conduit principal d'admission d'air équipé d'une vanne permettant d'alimenter le moteur avec un premier débit d'air pour une première condition de son fonctionnement, telle qu'au ralenti ou à faible charge, et un conduit en dérivation sur le conduit principal, de section différente à celle du conduit principal et équipé d'une vanne, de façon à amener à l'admission du moteur un débit d'air additionnel pour une autre condition de fonctionnement, telle qu'à haute charge ou à haute vitesse.

Ce dispositif présente l'inconvénient de ne pas pouvoir être utilisé pour contrôler l'air à l'admission du moteur pour permettre de faire fonctionner ce moteur selon deux modes de combustion.

La présente invention permet de remédier notamment aux problèmes énoncés ci-avant.

En effet, la présente invention consiste en une solution essentiellement mécanique, simple au problème du contrôle du débit d'air à l'admission d'un moteur pour son fonctionnement selon au moins deux modes de combustion, à savoir le mode stratifié ou le mode homogène..

Ainsi la présente invention a pour objet un dispositif de contrôle de l'air à l'admission d'un moteur quatre temps à allumage commandé et à injection directe de carburant dans la chambre de combustion, et fonctionnant selon au moins deux modes de combustion, un premier mode permettant une combustion stratifiée du mélange air/carburant et un deuxième mode avec une combustion homogène dudit mélange, ledit dispositif comprenant au moins un premier et un deuxième conduits d'admission issus d'un conduit principal d'admission d'air équipé d'un moyen de vannage et débouchant dans ou à proximité de la chambre de combustion, et un moyen de contrôle du débit d'air fourni à la chambre de combustion, ledit moyen de contrôle du débit d'air comprend un conduit disposé en dérivation sur ledit conduit principal, autour de son moyen de vannage, ledit conduit ayant une section sensiblement égale à celle du conduit principal, et un moyen permettant d'obturer au moins ledit conduit de dérivation dans le mode de combustion homogène.

Plus particulièrement, le dispositif comprend un conduit de recyclage des gaz d'échappement à l'admission équipé d'un moyen de vannage et qui débouche en aval du moyen de vannage du conduit principal..

De façon particulière, le deuxième conduit d'admission est équipé d'un clapet anti-retour et le conduit de dérivation comprend un moyen de vannage.

Selon un mode de réalisation de l'invention, le moyen d'obturation est disposé à la jonction du conduit de dérivation et du deuxième conduit et il permet d'obturer sélectivement l'un ou l'autre desdits conduits.

Selon un autre mode de réalisation de l'invention, ledit conduit de dérivation est placé en amont du collecteur d'admission d'un moteur multicylindre.

L'invention vise en outre un procédé de contrôle de l'air à l'admission d'un moteur quatre temps à allumage commandé et à injection directe de carburant dans la chambre de combustion, et fonctionnant selon au moins deux modes de combustion, un premier mode permettant une combustion stratifiée du mélange air/carburant et un deuxième mode avec une combustion homogène dudit mélange, ledit moteur comprenant un conduit principal d'admission d'air équipé d'un moyen de vannage et débouchant dans ou à proximité de la chambre de combustion, et un moyen de contrôle du débit d'air fourni à la chambre de combustion, ledit moyen de contrôle du débit d'air comprend un conduit disposé en dérivation sur ledit conduit principal autour de son moyen de vannage, ledit conduit ayant une section sensiblement égale à celle du conduit principal, et un moyen permettant d'obturer au moins ledit conduit de dérivation dans le mode de combustion homogène, procédé dans lequel on passe d'un mode de combustion à l'autre en obturant ou en ouvrant ledit conduit de dérivation.

Selon l'invention, pour une combustion stratifiée, l'air est amené dans la chambre de combustion par chacun des conduits d'admission et/ou à travers le conduit de dérivation.

Conformément à l'invention pour une combustion stratifiée avec recyclage des gaz d'échappement, un mélange de gaz d'échappement recyclés et d'air est introduit dans la chambre de combustion à travers le premier conduit d'admission.

Avantageusement, pour une combustion homogène, l'air fourni à la chambre de combustion est amené à travers le conduit commun puis simultanément et uniquement à travers le premier et le deuxième conduit d'admission, le conduit en dérivation étant alors fermé par le moyen de vannage.

En outre, pour une combustion homogène avec un recyclage des gaz d'échappement, l'air est essentiellement amené via le deuxième conduit tandis qu'un mélange d'air et de gaz recyclés est essentiellement amené à travers le premier conduit, le conduit de dérivation étant alors fermé par le moyen de vannage.

D'autres caractéristiques, avantages et détails de l'invention seront mieux compris à la lecture de la description qui va suivre, faite à titre illustratif et nullement limitatif en référence aux dessins annexés sur lesquels :
- La figure 1 est un schéma du dispositif de contrôle selon un mode de réalisation de l'invention;
- La figure 2 est un schéma du dispositif selon un autre mode de réalisation de l'invention.
- La figure 3 est un schéma relatif à encore un autre mode de réalisation de l'invention; et
- La figure 4 est un schéma simplifié d'application de l'invention à un moteur multicylindre.

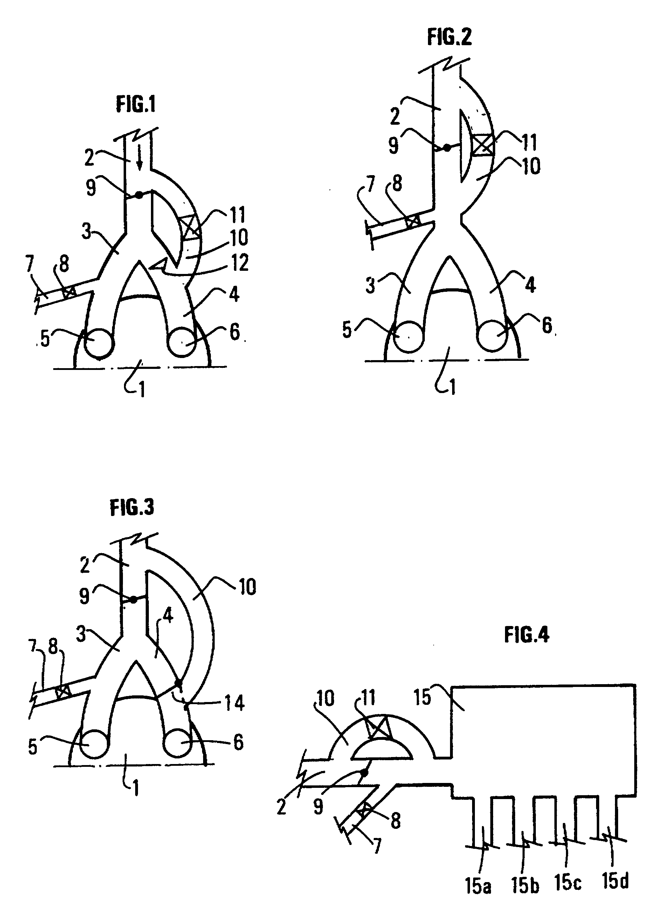

Selon la figure 1, de l'air est amené vers la chambre de combustion 1 à travers un conduit principal qui, de façon classique, se divise en autant de conduits qu'il existe d'orifices d'admission 5, 6 dans la chambre de combustion 1. Ici les deux conduits sont référencés 3 et 4.

Un conduit 7 de recyclage des gaz d'échappement peut déboucher dans l'un des deux conduits d'admission 3, 4. Un moyen de vannage 8 équipe préférentiellement le conduit 7 de recyclage des gaz d'échappement.

Par ailleurs dans le conduit principal 2 est monté un moyen de vannage 9 appelé couramment "papillon des gaz" qui correspond traditionnellement à la demande de couple faite par le conducteur lorsqu'il appuie sur la pédale d'accélération.

Selon l'invention, un conduit 10 est disposé en dérivation sur le conduit principal 2, autour de son moyen de vannage 9.

Le conduit 10 de dérivation présente avantageusement une section transversale sensiblement égale à celle du conduit principal 2.

En outre un moyen 11 est prévu afin d'obturer au moins ledit conduit de dérivation 10 (ou dérivation 10).

Selon la figure 1, le moyen 11 comprend une vanne disposée dans la dérivation 10 qui débouche dans le conduit d'admission 4. Un clapet anti-retour 12 est alors préférentiellement associé au fonctionnement de la vanne 11, le clapet anti-retour étant disposé dans le conduit d'admission 4 qui ne reçoit pas les gaz recyclés.

Le mode de réalisation de l'invention illustré sur la figure 2 diffère de celui qui vient d'être décrit par la position de la dérivation 10. Celle-ci débouche ici par ses deux extrémités dans le conduit principal 2, de part et d'autre du papillon 9. Comme pour la figure 1 un moyen de vannage 11 est disposé dans la dérivation 10 mais aucun clapet anti-retour supplémentaire n'est ici nécessaire.

La figure 3 illustre un mode de réalisation de l'invention qui diffère de celui de la figure 1 par le vannage des conduits 4 et 10.

Plus précisément, un unique moyen 14 ici sous forme de papillon est prévu, à la place de la vanne 11 et du clapet 12.

Le papillon 14 est un papillon "tout ou rien" qui, selon le mode de fonctionnement souhaité, peut obturer la dérivation 10 ou bien le conduit 4.

La figure 4 concerne plus particulièrement une application de l'invention à un moteur multicylindres dans lequel la dérivation 10 est disposée en amont du collecteur 15 qui distribue l'air à chacun des cylindres via des admissions spécifiques : 15a, 15b, 15c, 15d dans le cas de la figure 4.

Le fonctionnement du dispositif de contrôle selon l'invention va maintenant être décrit, en relation avec l'ensemble des modes de réalisation décrits ci-dessus.

Comme il a été rappelé en tête de la description il s'agit de pouvoir contrôler le débit d'air à l'admission de façon simple, fiable et économique selon les deux principaux modes de fonctionnement des moteurs visés, à savoir en mode stratifié et en mode homogène.

En fait chacun de ces modes se divise en deux fonctionnements différents selon que l'on réintroduit ou non des gaz d'échappement à l'admission.

En mode stratifié sans recirculation de gaz d'échappement (sans EGR), la vanne 8 étant donc fermée, la vanne 11 est alors ouverte de sorte que les orifices d'admission 5 et 6 reçoivent chacune un plein débit d'air. Dans le mode de réalisation selon la figure 3, le papillon 14 ouvre le conduit de dérivation 10 et produit le même résultat.

Si toutefois, selon la figure 1, le clapet anti-retour 12 est utilisé, alors seul l'orifice 6 associé au conduit d'admission 10 recevra l'air.

En mode stratifié avec EGR, la vanne 8 est ouverte et le conduit de dérivation 10 n'est pas obturé. Si selon la figure 1 le clapet anti-retour 12 est utilisé, alors l'orifice 5 reçoit un mélange d'air et d'EGR ce qui permet de stratifier l'EGR dans la chambre de combustion 1. La même configuration est obtenue avec le mode de réalisation de la figure 3 en formant le conduit 4 et en ouvrant le conduit 10.

En mode homogène sans EGR, la vanne 8 est fermée et le conduit de dérivation 10 est obturé (soit par la vanne 11 soit par le volet 14). Ainsi l'on se retrouve dans le cas classique d'un fonctionnement de moteur 4 temps à allumage commandé où un mélange homogène est obtenu dans la chambre de combustion grâce à une arrivée symétrique d'air dans la chambre de combustion via les deux conduits d'admission 3 et 4.

En mode homogène avec EGR le conduit de dérivation 10 reste obturé tandis que la vanne 8 est ouverte. Si le clapet 12 (dans le cas de la figure 1) est utilisé, l'EGR arrive alors uniquement par le conduit 3 ; ce qui est une façon de stratifier l'EGR tout en restant dans le mode homogène.

Il ressort de ce qui précède que la commande appropriée des vannes 8 et 11 (ou 8 et 14 dans le cas de la figure 3) permet d'obtenir d'une façon simple et essentiellement mécanique l'ensemble des modes de fonctionnement souhaités et réalisés jusqu'ici par des moyens électriques voire électroniques. Les vannes précitées étant commandées pour fonctionner en "tout ou rien", leur commande ainsi donc que leur fonctionnement reste simple. Ceci constitue une réelle simplification vis-à-vis de l'art antérieur. En d'autres termes, la gestion et le contrôle du débit d'air à l'admission d'un moteur quatre temps à allumage commandé et à injection directe de carburant dans la chambre de combustion sont donc ici parfaitement réalisés.

Chacun des deux principaux modes de fonctionnement, à savoir en mode stratifié, c'est-à-dire avec plein débit d'air à l'admission et une combustion en excès d'air, et en mode homogène qui correspond à une combustion en stochiométrie, est parfaitement opéré.

De plus, le changement de mode de fonctionnement peut être réalisé de façon quasi instantanée, répondant ainsi parfaitement aux exigences des moteurs actuels.

## Revendications

1. Dispositif de contrôle de l'air à l'admission d'un moteur quatre temps à allumage commandé et à injection directe de carburant dans la chambre de combustion (1), et fonctionnant selon au moins deux modes de combustion, un premier mode permettant une combustion stratifiée du mélange air/carburant et un deuxième mode avec une combustion homogène dudit mélange, ledit dispositif comprenant au moins un premier (3) et un deuxième (4) conduits d'admission issus d'un conduit principal (2) d'admission d'air équipé d'un moyen de vannage (9) et débouchant dans ou à proximité de la chambre de combustion (1), et un moyen de contrôle du débit d'air foürni à la chambre de combustion, ledit moyen de contrôle du débit d'air comprend un conduit (10) disposé en dérivation sur ledit conduit principal (2), autour de son moyen de vannage (9), ledit conduit (10) ayant une section sensiblement égale à celle du conduit principal (2), et un moyen (11, 12 ; 14) permettant d'obturer au moins ledit conduit de dérivation (10) dans le mode de combustion homogène.

2. Dispositif selon la revendication 1, **caractérisé en ce qu'**il comprend un conduit (7) de recyclage des gaz d'échappement à l'admission équipé d'un moyen de vannage (8) et qui débouche en aval du moyen de vannage (9) du conduit principal.

3. Dispositif selon la revendication 1, **caractérisé en ce que** le deuxième conduit d'admission (4) est équipé d'un clapet anti-retour (12) et le conduit de dérivation (10) comprend un moyen de vannage (11).

4. Dispositif selon l'une quelconque des revendications 1 à 3, **caractérisé en ce que** le moyen d'obturation (14) est disposé à la jonction du conduit de dérivation (10) et du deuxième conduit (4) et **en ce qu'**il permet d'obturer sélectivement l'un ou l'autre desdits conduits (10, 4).

5. Dispositif selon la revendication 1, **caractérisé en ce que** ledit conduit de dérivation (10) est placé en amont du collecteur d'admission d'un moteur multicylindre.

6. Procédé de contrôle de l'air à l'admission d'un moteur quatre temps à allumage commandé et à injection directe de carburant dans la chambre de combustion (1), et fonctionnant selon au moins deux modes de combustion, un premier mode permettant une combustion stratifiée du mélange air/carburant et un deuxième mode avec une combustion homogène dudit mélange, ledit moteur comprenant un conduit principal (2) d'admission d'air équipé d'un moyen de vannage (9) et débouchant dans ou à proximité de la chambre de combustion (1), et un moyen de contrôle du débit d'air fourni à la chambre de combustion, ledit moyen de contrôle du débit d'air comprend un conduit (10) disposé en dérivation sur ledit conduit principal (2), autour de son moyen de vannage (9), ledit conduit (10) ayant une section sensiblement égale à celle du conduit principal (2), et un moyen (11, 12 ; 14) permettant d'obturer au moins ledit conduit de dérivation (10) dans le mode de combustion homogène procédé dans lequel on passe d'un mode de combustion à l'autre en obturant ou en ouvrant ledit conduit de dérivation.

7. Procédé selon la revendication 6, **caractérisé en ce que**, pour une combustion stratifiée, de l'air est amené dans la chambre de combustion par chacun des conduits d'admission et/ou à travers le conduit de dérivation (10).

8. Procédé selon la revendication 6, **caractérisé en ce que**, pour une combustion stratifiée avec recyclage des gaz d'échappement, un mélange de gaz d'échappement recyclés et d'air est introduit dans la chambre de combustion (1) à travers le premier conduit d'admission (3).

9. Procédé selon la revendication 6, **caractérisé en ce que**, pour une combustion homogène, l'air fourni à la chambre de combustion (1) est amené à travers le conduit commun (2) puis simultanément et uniquement à travers le premier et le deuxième conduit d'admission (3, 4), le conduit de dérivation (10) étant alors fermé par le moyen de vannage (11).

10. Procédé selon la revendication 6, **caractérisé en ce que**, pour une combustion homogène avec un recyclage des gaz d'échappement, l'air est essentiellement amené via le deuxième conduit (4) tandis qu'un mélange d'air et de gaz recyclés est essentiellement amené à travers le premier conduit (3), le conduit de dérivation (10) étant alors fermé par le moyen de vannage.

## Patentansprüche

1. Vorrichtung zur Regelung der Einlassluft einer fremdgezündeten Viertaktbrennkraftmaschine mit direkter Einspritzung von Treibstoff in die Brennkammer (1), die gemäß wenigstens zwei Verbrennungsarten funktioniert, einer ersten Art, die eine geschichtete Verbrennung des Luft/Treibstoffgemisches erlaubt und einer zweiten Art mit einer homogenen Verbrennung dieses Gemisches, wobei die Vorrichtung wenigstens eine erste (3) und eine zweite (4) Einlassleitung umfasst, die aus einer Lufthaupteinlassleitung (2) stammen, welche mit einem Ventilsystem (9) ausgestattet ist und in oder benachbart der Brennkammer (1) mündet und einem Mittel zur Regelung der der Verbrennungskammer gelieferten Luftmenge, wobei das Regelmittel für die Luftmenge eine Leitung (10) umfasst, die parallel zu dieser Hauptleitung (2) um ihre Ventilsteuerung (9) herum ausgebildet ist und die Leitung (10) einen Querschnitt im wesentlichen gleich dem der Hauptleitung (2) und ein Mittel (11, 12; 14) hat, welches es ermöglicht, wenigstens diese Parallelleitung (10) in dem homogenen Verbrennungsmode bzw. der homogenen Verbrennungsart zu schließen.

2. Vorrichtung nach Anspruch 1, **dadurch gekennzeichnet, dass** sie eine Leitung (7) zur Rezyklierung der Auslassgase zum Einlass umfasst, und zwar ausgestattet mit einem Ventilmittel (8), welche hinter diesem Ventilmittel (9) der Hauptleitung mündet.

3. Vorrichtung nach Anspruch 1, **dadurch gekennzeichnet, dass** die zweite Einlassleitung (4) mit einer Rückschlagklappe (12) ausgestattet ist und die Parallelleitung (10) ein Ventilmittel (11) umfasst.

4. Vorrichtung nach einem der Ansprüche 1 bis 3, **dadurch gekennzeichnet, dass** das Verschlussmittel (14) am Übergang der Parallelleitung (10) und der zweiten Leitung (4) angeordnet ist und dass es ermöglicht, selektiv die eine oder andere dieser Leitungen (10, 4) zu verschließen.

5. Vorrichtung nach Anspruch 1, **dadurch gekennzeichnet, dass** die Parallelleitung (10) vor dem Einlass-Sammler eines Mehrzylindermotors angeordnet ist.

6. Verfahren zur Regelung der Einlassluft einer fremdgesteuerten Viertaktbrennkraftmaschine mit direkter Einspritzung des Treibstoffs in die Brennkammer (1), die gemäß wenigstens zwei Verbrennungsmodes arbeitet, einem ersten Mode, der eine geschichtete Verbrennung des Luft/Treibstoffgemisches ermöglicht und einem zweiten Mode mit homogener Verbrennung dieses Gemisches, wobei dieser Motor eine Haupteinlassleitung (2) für Luft, ausgestattet mit einem Ventilmittel (9) umfasst, die in oder in der Nähe der Brennkammer (1) mündet und ein Mittel zur Regelung der der Brennkammer gelieferten Luftmenge, wobei dieses Regelmittel für die Luftmenge eine Leitung (10) umfasst, die parallel zur Hauptleitung (2) um ihr Ventilmittel (9) angeordnet ist und die Leitung (10) einen Querschnitt im wesentlichen gleich dem der Hauptleitung (2) und ein Mittel (11, 12; 14) umfasst, welches es ermöglicht, wenigstens diese Parallelleitung (10) im homogenen Verbrennungsmode zu schließen, Verfahren, bei dem man von einem Verbrennungsmode zum anderen übergeht, indem man diese Parallelleitung schließt oder öffnet.

7. Verfahren nach Anspruch 6, **dadurch gekennzeichnet, dass** für eine geschichtete Verbrennung Luft in die Brennkammer durch jede der Einlassleitungen und/oder über die Parallelleitung (10) geführt wird.

8. Verfahren nach Anspruch 6, **dadurch gekennzeichnet,, dass** für eine geschichtete Verbrennung unter Rezyklierung der Auslassgase ein Gemisch aus rezyklierten Auslassgasen und Luft in die Brennkammer (1) über die erste Einlassleitung (3) eingeführt wird.

9. Verfahren nach Anspruch 6, **dadurch gekennzeichnet, dass** für eine homogene Verbrennung die der Brennkammer (1) gelieferte Luft über die gemeinsame Leitung (2) und dann gleichzeitig und allein über die erste und zweite Einlassleitung (3, 4), wobei die Parallelleitung (10) dann durch das Ventilmittel (11) geschlossen ist, zugeführt wird.

10. Verfahren nach Anspruch 6, **dadurch gekennzeichnet, dass** für eine homogene Verbrennung unter Rezyklierung der Auslassgase die Luft im wesentlichen über die zweite Leitung (4) zugeführt wird, während ein Gemisch aus Luft und rezyklierten Gasen im wesentlichen über die erste Leitung (3) zugeführt wird, wobei die Parallelleitung (10) dann durch das Ventilmittel geschlossen ist.

## Claims

1. A device for controlling the intake air of a spark-ignition four-stroke engine with direct injection of fuel into the combustion chamber (1), operating in at least two modes of combustion, the first mode allowing stratified combustion of an air/fuel mixture and a second mode with homogeneous combustion of the said mixture, the said device including at least a first (3) and a second (4) admission pipe coming from a main air intake pipe (2) equipped with a throttling device (9) and opening into or near to the combustion chamber (1), and a means of controlling the air flow supplied to the combustion chamber, wherein said air flow control means comprises a pipe (10) mounted as a bypass on said main pipe (2), around the throttling device (9) thereof, said pipe (10) having a section substantially equal to that of said main pipe (2), and a means (11, 12, 14) allowing sealing of at least the said bypass (10) in the homogeneous combustion mode.

2. A device according to Claim 1, **characterised in that** it includes a pipe (7) for recycling exhaust gases back to the intake, equipped with a throttling device (8) and that opens downstream from the throttling device (9) of the main pipe.

3. A device according to Claim 1, **characterised in that** the second intake pipe (4) is equipped with a non-return valve (12) and the bypass pipe (10) comprises a throttling device (11).

4. A device according to any one of claims 1 to 3, **characterised in that** the means of sealing (14) is situated at the junction of bypass (10) and the second pipe (4) and allows selective sealing of one or the other of the said pipes (10, 4).

5. A device according to Claim 1, wherein the said bypass pipe (10) is placed upstream from the intake manifold of a multicylinder engine.

6. A procedure for controlling the intake air of a spark-ignition four-stroke engine with direct injection of fuel into the combustion chamber (1), operating in at least two modes of combustion, the first mode allowing stratified combustion of an air/fuel mixture and a second mode with homogeneous combustion of the said mixture, the said engine including a main intake pipe (2) equipped with a throttling device (9) and opening into or near to the combustion chamber (1), and a means of controlling the air flow supplied to the combustion chamber, wherein the said means of air flow control comprises a pipe (10) mounted as a bypass on the said main pipe (2), around the throttling device (9) thereof, the said pipe (10) having a section substantially equal to that of the main pipe (2), and a means (11, 12, 14) of allowing sealing of at least the said bypass (10) in the homogeneous combustion mode, wherein the transfer from one mode of combustion to the other is achieved by closing or opening the said bypass pipe.

7. A procedure according to Claim 6, **characterised in that** for stratified combustion the air is fed into the combustion chamber by each of the intake pipes and/or through the bypass pipe (10).

8. A procedure according to Claim 6, **characterised in that** for stratified combustion with exhaust gas recirculation a mixture of recycled exhaust gases and air is fed into the combustion chamber (1) through the first intake pipe (3).

9. A procedure according to Claim 6, **characterised in that** for homogeneous combustion the air supplied to the combustion chamber is fed through the common pipe (2) then simultaneously and only through the first and second intake pipes (3, 4), the bypass pipe (10) being then closed by the throttling device (11).

10. A procedure according to Claim 6, **characterised in that** for homogeneous combustion with exhaust gas recirculation air is mainly supplied via the second pipe (4) while a mixture of air and recycled gases is mainly fed through the first pipe (3), the bypass pipe (10) being then closed by the throttling device.
